(19)

Europäisches
Patentamt

European
Patent Office

Office européen
des brevets

(11)     **EP 3 753 417 A1**

(12)     **EUROPEAN PATENT APPLICATION**

(43) Date of publication:
**23.12.2020   Bulletin 2020/52**

(21) Application number: **19181563.8**

(22) Date of filing: **20.06.2019**

(51) Int Cl.:
**A23K 20/10** (2016.01)          **A23K 20/111** (2016.01)
**A23K 20/158** (2016.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **PerformaNat GmbH
14163 Berlin (DE)**

(72) Inventors:
• **Rosendahl, Julia
  14163 Berlin (DE)**
• **Schrapers, Katharina
  14163 Berlin (DE)**

(74) Representative: **Van den Berg, Frans Richard
Van den Berg IP GmbH
Roessligasse 30
4132 Muttenz (CH)**

(54)     **FEED ADDITIVE**

(57)     The present invention pertains to a feed additive for monogastric animal feed comprising a TRP modulator capable of improving calcium uptake in the intestine of a monogastric animal, and a controlled release agent.

**EP 3 753 417 A1**

**Description**

The present invention pertains to feed additives comprising a TRP modulator.

In US 2015/0164822, TRP modulators are reported to be used in feed additives. Examples of such TRP modulators include menthol and thymol. These TRP modulators serve to alleviate gastrointestinal tract disorders in ruminants, such as rumen acidosis and parturient paresis. The speed of resorption from the rumen of ammonium, calcium, magnesium and protons can be regulated using the TRP modulators.

WO 2017/37157 discloses the use of essential oils, in particular microencapsulated thyme oil (consisting of anethol and thymol), in combination with saponins for improving the feed conversion in poultry. The microencapsulation serves to improve the bioavailability of the thyme oil.

In WO 2015/86758 the use of biotin and at least two essential oils to increase the intramuscular fat deposition and marbling in cows are described. WO 2016/128530 combines bacterial amylase with at least two essential oils selected from thymol, eugenol, meta-cresol, vanillin and guajacol to improve the digestibility of feed in rumen. Essential oils have been reported for a wide variety of uses. However, none disclose the possibility and effect of essential oils in the intestine of monogastric animals.

It is an object of the invention to provide an improved feed additive.

The invention pertains to a feed additive for monogastric animal feed comprising a TRP modulator capable of improving calcium uptake in the intestine of a monogastric animal, and a controlled release agent. The feed additive of the invention allows for the release of the TRP modulator in the intestine rather than the stomach of the animal. This has the advantage that the TRP modulator can stimulate the resorption of cations, in particular calcium ions, in at least part of the intestine. The TRP modulators are chosen such that a positive influence of the cation uptake in the jejunum, caecum and/or the colon. It was found that the presence of the TRP channels in each part of the intestine does not guarantee a positive stimulation of the calcium ion uptake. Surprisingly, the TRP modulator of the invention were observed to have a more pronounced effect than expected based on the presence of the TRP channels alone. The feed additive of the invention brings about an improved immune system in the monogastric animals, in particular the immunoglobulin (Ig) concentration in the blood plasma may increase. This in turn may render a reduction in the use of antibiotics. The use of the inventive feed additive may further lead to a reduction of the severity of or even prophylaxis of mastitis metritis agalactia (MMA) in swineThe feed additive of the invention may further improve the barrier function of the gut, which in turn may lead to a lower influx of bacteria from the gut into the blood. Also the occurrence of post weaning diarrhea in piglets may be reduced. In poultry, the quality of the egg shell is generally improved. Additionally, the bone density in poultry may be improved and/or the occurrence of osteoporosis reduced. Moreover, the digestibility of the feed and/or nutrient uptake are generally improved.

The feed additive of the invention comprises a TRP modulator. The term "TRP modulator" refers to compounds that can influence the activity of the transient receptor potential (TRP) channels. Compound that are capable of increasing the activity of the TRP channels are referred to as TRP agonists. TRP antagonists are capable of decreasing the activity of the TRP channels. The TRP modulator can influence one or more specific TRP channels. For instance, the TRP modulator may activate or increase the activity of two or more TRP channels. The TRP modulator may further inhibit or decrease the activity of two or more TRP channels. The TRP modulator may activate one or more TRP channels and may inhibit another TRP channel. Examples of such TRP channels include TRPV (vanilloid receptor) such as TRPV1, TRPV2, TRPV3, TRPV4, TRPV5 and TRPV6; TRPM (melastatin) such as TRPM3, TRPM5, TRPM6, TRPM7 and TRPM8; TRPC (classic) such as TRPC1, TRPC3 and TRPC6; TRPA (ankyrin) such as TRPA1; TRPP (polycystin) such as TRPP1, TRPP2 and TRPP3; and TRPML (mucolipin) such as TRPML1, TRPML2 and TRPML3. Especially interesting for the feed additive of the invention are the TRP channels present in the intestine of monogastric animals. Specific TRP channels observed in the intestine of monogastric animals include TRPA1, TRPV3, TRPV6, TRPM6 and TRPM7. Preferably, the TRP modulator is a TRP modulator capable of stimulating at least one TRP channel selected from the group consisting of TRPA1, TRPV3, TRPV6, TRPM6 and TRPM7. More preferably, the TRP modulator is a TRP modulator capable of stimulating at least one TRP channel selected from the group consisting of TRPA1 and TRPV3.

The TRP modulator may be any TRP modulator capable of improving calcium uptake in the intestine of a monogastric animal. Examples of such TRP modulators include borneol, carvacrol, citral, eugenol, linalool, menthol, methyl salicylate, oleocanthal, thymol, vanillin and cinnamaldehyde. In one embodiment, the TRP modulator is selected from the group consisting of borneol, carvacrol, citral, linalool, thymol, vanillin and cinnamaldehyde. In another embodiment, the TRP modulator is selected from the group consisting of carvacrol, citral, linalool, vanillin and cinnamaldehyde. In a preferred embodiment, the TRP modulator is selected from the group consisting of cinnamaldehyde, carvacrol, vanillin and linalool.

In one embodiment, the TRP modulator is a TRP modulator capable of improving calcium uptake in the caecum of a monogastric animal. Preferably, the TRP modulator is carvacrol.

In one embodiment, the feed additive of the invention may comprise the TRP modulator in an amount of at least 1 percent by weight (wt%), preferably at least 2 wt%, more preferably at least 5 wt%, even more preferably at least 7 wt%, and most preferably at least 10 wt%, and preferably at most 90 wt%, more preferably at most 80 wt%, even more preferably at most 70 wt%, even more preferably at most 60 wt%, and most preferably at most 50 wt%, based on the total weight of the feed additive.

In one embodiment, the feed additive comprises a second TRP modulator capable of improving calcium uptake in the colon of a monogastric animal. Preferably, the second TRP modulator is selected from the group consisting of borneol, citral, linalool, vanillin, thymol and cinnamaldehyde. More preferably, the second TRP modulator is selected from the group consisting of citral, vanillin, linalool or cinnamaldehyde.

In one embodiment, the feed additive of the invention may comprise the second TRP modulator in an amount of at least 1 percent by weight (wt%), preferably at least 2 wt%, more preferably at least 5 wt%, even more preferably at least 7 wt%, and most preferably at least 10 wt%,, and preferably at most 90 wt%, more preferably at most 80 wt%, even more preferably at most 70 wt%, even more preferably at most 60 wt%, and most preferably at most 50 wt%, based on the total weight of the feed additive.

In one embodiment, the feed additive comprises a third TRP modulator capable of improving calcium uptake in the jejunum of a monogastric animal. Preferably, the second TRP modulator is selected from the group consisting of carvacrol linalool, vanillin, and thymol. More preferably, the second TRP modulator is selected from the group consisting of linalool or vanillin.

In one embodiment, the feed additive of the invention may comprise the third TRP modulator in an amount of at least 1 percent by weight (wt%), preferably at least 2 wt%, more preferably at least 5 wt%, even more preferably at least 7 wt%, and most preferably at least 10 wt%,, and preferably at most 90 wt%, more preferably at most 80 wt%, even more preferably at most 70 wt%, even more preferably at most 60 wt%, and most preferably at most 50 wt%, based on the total weight of the feed additive.

The invention further pertains to a feed additive comprising a controlled release agent, carvacrol, cinammaldehyde, linalool and optionally vanillin.

In one embodiment, the feed additive of the invention may comprise the total of TRP modulators, thus including the second TRP modulator and third TRP modulator, in an amount of at least 1 percent by weight (wt%), preferably at least 2 wt%, more preferably at least 5 wt%, even more preferably at least 7 wt%, and most preferably at least 10 wt%,, and preferably at most 90 wt%, more preferably at most 80 wt%, even more preferably at most 70 wt%, even more preferably at most 60 wt%, and most preferably at most 50 wt%, based on the total weight of the feed additive.

In one embodiment, the weight ratio between the TRP modulator and the second TRP modulator is at most 10, preferably at most 5 and most preferably at most 2, and generally at least 0.1, preferably at least 0.2 and most preferably at least 0.5.

In one embodiment, the weight ratio between the TRP modulator and the third TRP modulator is at most 10, preferably at most 5 and most preferably at most 2, and generally at least 0.1, preferably at least 0.2 and most preferably at least 0.5.

The feed additive of the invention comprises a controlled release agent. The controlled release agent can be any controlled release agent known in the art, and capable of releasing the TRP modulator in the intestine of the monogastric animal. The controlled release agent should be able to withstand the conditions in the stomach of the monogastric animal. Preferably, the controlled release agent is stable at a pH below 5. In the context of this application, the term "stable at a pH below 5" means that the controlled release agent does not or very slowly dissolve and/or disintegrate at a pH below 5 so that the TRP modulator is not released in the stomach, or at most 20 wt% of the TRP modulator is released in the stomach. In one embodiment, the TRP modulator is dissolved in and/or encapsulated by the controlled release agent. Also morphologies comprising a core-shell with the controlled release agent in the shell or multiple layers of controlled release agents are contemplated. The feed additive of the invention can be prepared using methods known in the art.

In one embodiment of the invention, the controlled release agent is selected from a group consisting of hydrogenated animal oils, hydrogenated vegetable oils, fatty acids having at least 14 carbon atoms and pH sensitive polymers. Examples of hydrogenated animal oils include hydrogenated beef tallow, beef lard, hydrogenated fish oil and hydrogenated mutton tallow. Examples of hydrogenated vegetable oils include hydrogenated palm oil, hydrogenated soybean oil, hydrogenated rapeseed oil, hydrogenated cotton seed oil and hydrogenated castor oil. The wording "hydrogenated" refers to the hydrogenation of unsaturated bonds in the oils so that the oils become solidified (i.e. hardened). The hydrogenation can be complete or partial. Examples of fatty acids having at least 14 carbon atoms include stearic acid, palmitic acid, oleic acid, olenic acid and behenic acid. The pH sensitive polymers are generally stable at a pH below 5 and dissolve and/or disintegrate in the intestine of the monogastric animal. Examples of pH sensitive polymers include synthetic polymers such as polyethylene, polyethylene wax and copoly(2-vinyl pyridine-styrene); and natural polymers such as waxes like bees wax and paraffin wax; and cellulose derivatives like cellulose propionate morpholinobutyrate (CPMB), cellulose isobutyrate morpholinobutyrate (CIBMB), cellulose acetobutyrate and ethyl cellulose. Further examples and embodiments can be found in US 4,808,412, US 4,832,967 and US 4,876,097. The combination of two or more encapsulating agents is also contemplated. The controlled release agent may further be combined with additives commonly used in controlled release applications, such as fillers including silica and calcium carbonate. Preferably, the controlled release agent is hydrogenated vegetable oil. In one embodiment, the controlled release is a hydrogenated vegetable oil selected from the group consisting of hydrogenated palm oil, hydrogenated soybean oil, hydrogenated rapeseed oil, hydrogenated cotton seed oil and hydrogenated castor oil. Most preferred is hydrogenated rapeseed oil.

In one embodiment, the feed additive of the invention may comprise the controlled release agent in an amount of at least 10 percent by weight (wt%), preferably at least 20 wt%, more preferably at least 30 wt%, even more preferably at least 40 wt%, and most preferably at least 50 wt%, and preferably at most 99 wt%, more preferably at most 95 wt%, even more preferably at most 90 wt%, even more preferably at most 85 wt%, and most preferably at most 80 wt%, based on the total weight of the feed additive.

The feed additive may further comprise other ingredients commonly used in feed additives. Such other ingredients include vitamins and trace minerals.

The remaining part of the feed additive may be comprised of other components commonly used in such feed additives. With the TRP modulators and controlled release agent, the other components add up to 100 wt% of the total weight of the feed additive.

The feed additive of the invention can be applied to a premix of animal feed or animal feed. Consequently, the invention further pertains to animal feed comprising the feed additive of the invention.

In yet another aspect, the amount of feed additive is at least 0.001 wt%, preferably at least 0.01 wt%, more preferably at least 0.02 wt% and most preferably at least 0.05 wt%, and at most 10 wt%, preferably at most 8 wt%, more preferably at most 5 wt%, and most preferably at most 3 wt%, based on the total weight of the animal feed.

In a first embodiment of the animal feed according to the invention, the feed additive is present in the animal feed in an amount of at least 0.001 kg per ton of total daily intake, preferably at least 0.01 kg, more preferably at least 0.02 kg per ton, and at most 10 kg per ton of total daily intake of feed, preferably at most 5 kg per ton, more preferably at most 2 kg per ton, and most preferably at most 1 kg per ton of total daily intake. In the context of this application, the "total daily intake of feed" is the complete mass of feed an animal takes per day, excluding drinking water and added water to the animal feed.

The invention further pertains to a premix of animal feed comprising a feed additive comprising comprising a TRP modulator capable of improving calcium uptake in the intestine of a monogastric animal, and a controlled release agent.

In yet a further aspect, the amount of feed additive is at least 0.1 wt%, preferably at least 0.5 wt%, more preferably at least 1 wt% and most preferably at least 2 wt%, and at most 15 wt%, preferably at most 12 wt%, more preferably at most 10 wt%, and most preferably at most 5 wt%, based on the total weight of the premix of animal feed.

In yet a further aspect, the amount of TRP modulator is at least 0.1 wt%, preferably at least 0.5 wt%, more preferably at least 1 wt% and most preferably at least 2 wt%, and at most 15 wt%, preferably at most 12 wt%, more preferably at most 10 wt%, and most preferably at most 5 wt%, based on the total weight of the premix of animal feed.

Animal feed generally comprises animal nutrients such as fats and/or proteins and/or carbohydrates that is fed to an animal to provide in its metabolic requirements. Animal feed can be a nutritionally complete feed (i.e. providing all required nutrients to support a normal metabolism of the animal). Similar ingredients are also contained in a premix of animal feed, which however contains only part of the required nutrients, and need to be mixed with other nutrients or fed separately from these other nutrients.

The invention further pertains to a composition comprising a calcium source, a feed additive comprising a TRP modulator capable of improving calcium uptake in the intestine of a monogastric animal, and a controlled release agent. The composition may be a paste. Alternatively, the composition can be a powder, a calcium bolus or a drinking solution for monogastric animals such as poultry or swine.

In yet a further aspect, the amount of feed additive is at least 0.1 wt%, preferably at least 0.5 wt%, more preferably at least 1 wt% and most preferably at least 2 wt%, and at most 15 wt%, preferably at most 12 wt%, more preferably at most 10 wt%, and most preferably at most 5 wt%, based on the total weight of the composition.

In yet a further aspect, the amount of TRP modulator is at least 0.1 wt%, preferably at least 0.5 wt%, more preferably at least 1 wt% and most preferably at least 2 wt%, and at most 15 wt%, preferably at most 12 wt%, more preferably at most 10 wt%, and most preferably at most 5 wt%, based on the total weight of the composition.

The invention further pertains to a method of feeding an animal by providing feed to the animal comprising a feed additive comprising a TRP modulator capable of improving calcium uptake in the intestine of a monogastric animal, and a controlled release agent.

The invention further pertains to the use of the feed additive of the invention to improve the immune system in monogastric animals. The invention further pertains to the use of the feed additive of the invention in the alleviation and/or prophylaxis of mastitis metritis agalactia (MMA) in swine.

The invention further pertains to the use of the feed additive of the invention to increase the cation uptake, preferably the $Ca^{2+}$ uptake, in the intestine of a monogastric animal, in particular in the jejunum, caecum and/or colon of a monogastric animal.

In the context of this application, the wording "livestock" refers to animals that are domesticated and raised in an agricultural setting to produce labor and commodities such as meat, eggs, milk, fur, leather and wool. Livestock includes ruminants such as cows, sheep, goats and camels; and monogastrics such as pigs and poultry. The present invention is particularly advantageous for use in monogastric livestock animals such as poultry and swine.

The invention is illustrated with the following examples.

EXAMPLES

Example 1

Example 1

*Material and Methods*

All animals were slaughtered in accordance with German laws for the protection of animals. Removal of intestinal tissue occurred directly after death, was stripped and transported to the laboratory in a warm and gassed transport buffer.

Measurement of Ca-Transport across epithelium out of the jejunum, caecum and colon of pigs in the Ussing-chamber

Tissue was mounted in a conventional Ussing chamber. Chambers contained 16 ml of serosal or mucosal buffer, which was circulated and gassed by a gas lift system (5% CO2/95% $O_2$).

Groups

In this experiment 24 chambers were divided into three groups. Group A (jejunum) group B (caecum) and group 3 (colon). Each group (A,B,C) was again divided into four groups (three different TRP-groups (EO) and one control group(control)).

Procedure

After ten minutes the chambers were clamped to short circuit mode (Mussler Scientific Instruments, Aachen, Germany). Transepithelial current (Isc) and conductance (Gt) were measured continuously.

After an equilibrating time of around 30 minutes $^{45}Ca^{2+}$ (40kBq per 16 ml chamber) (PerkinElmer Life Sciences, Rodgau-Jügesheim, Germany) was added to either to the mucosal or serosal "hot" side. At the same time, depending on the group $16\mu l$ ethanol (Control) or $16\mu l$ essential oil (EO) were added to the mucosal side of the chamber.

The tissue was incubated for 50 min to allow equilibration. At this time the first sample from the "cold" side was taken ($900\mu l$), followed by 4 samples of each $900\mu l$ very 45 minutes. The flux rates were calculated from the rate of appearance of calcium for four flux periods. The sample volume was replaced by an aliquot of the respective buffer. Radioactivity was measured using a $\beta$-counter (LKB Wallace-Perkin-Elmer, Überlingen, Germany). The concentration of the agonist was elevated by $100\mu M$ directly after the sampling for the second flux period to test concentration effects.

**Table 1** *Chemical composition of the mucosa and serosal buffer solutions used in this Ussing-chamber experiment*

|  | mucosal | serosal |
|---|---|---|
| Chemical | mM | mM |
| $CaCl_2$ | 1.2 | 1.2 |
| $MgCl_2$ | 1.2 | 1.2 |
| MES free acid | 10.0 | 0 |
| Hepes free acid | 0 | 10.0 |
| NaCl | 115.0 | 115.0 |
| NaH2PO4 | 0.4 | 0.4 |
| Na2HPO4 | 2.4 | 2.4 |
| KCL | 5.0 | 5.0 |
| NaHCO3 | 25.0 | 25.0 |
| Enrofloxacine | 0.0278 | 0.0278 |

(continued)

| | mucosal | serosal |
|---|---|---|
| Mannitol | 5.0 | 0 |
| Glucose | 0 | 5.0 |
| pH | 6.4 | 7.4 |

*Results*

The results obtained are shown in the respective Tables 2, 3 and 4, of the transepithelial calcium flux across the porcine jejunum, caecum and colon depending on the addition of the specific TRP modulator.

Table 2: Effects of various essential oils on the flux of calcium of porcine jejunum in $nmol \cdot h^{-1} \cdot cm^{-2}$

| | $J_{m \to s}^{Ca^{2+}}$ | Rel% | $J_{s \to m}^{Ca^{2+}}$ | Rel% | $J_{net}^{Ca^{2+}}$ | Rel% |
|---|---|---|---|---|---|---|
| Control | 49.76 ± 2.85 | 100.0 | 36.81 ± 1.69 | 100.0 | 12.95 ± 3.13 | 100.0 |
| Borneol | 49.69 ± 4.55 | 99.9 | 40.54 ± 2.97 | 110.1 | 9.04 ± 5.41 | 69.8 |
| Carvacrol | 58.24 ± 4.10* | 117.0 | 40.48 ± 2.63 | 110.0 | 17.42 ± 4.80 | 134.5 |
| Citral | 50.24 ± 3.92 | 101.0 | 36.77 ± 2.50 | 99.9 | 12.92 ± 4.57 | 99.8 |
| Eugenol | 56.75 ± 4.62 | 114.1 | 43.58 ± 2.81* | 118.4 | 11.96 ± 5.48 | 92.4 |
| Linalool | 56.36 ± 3.75* | 113.3 | 38.46 ± 2.37 | 104.5 | 17.92 ± 4.34 | 138.4 |
| Menthol | 54.54 ± 3.77 | 109.6 | 37.94 ± 2.38 | 103.1 | 16.57 ± 4.36 | 128.0 |
| Methylsalicylate | 58.08 ± 4.10* | 116.7 | 44.24 ± 2.63* | 120.2 | 13.74 ± 4.80 | 106.1 |
| Oleocanthal | 50.56 ± 4.66 | 101.6 | 43.22 ± 3.03* | 117.4 | 7.97 ± 5.52 | 61.6 |
| Thymol | 59.00 ± 4.55* | 118.6 | 40.84 ± 2.97 | 110.9 | 18.05 ± 5.41 | 139.4 |
| Vanillin | 56.92 ± 4.15 | 114.4 | 39.04 ± 2.65 | 106.0 | 18.5 ± 4.85 | 142.9 |
| Cinnamaldehyde | 47.12 ± 4.15 | 94.7 | 35.39 ± 2.65 | 96.1 | 12.34 ± 4.85 | 95.3 |
| Statistical difference to control within one column are marked with "*", tends (p<0.1) are marked with "·". | | | | | | |

The absorption of calcium was significantly increased by carvacrol (+8.48 ± 3.62 nmol-h$^{-1}$·cm$^{-2}$, p=0.022), linalool (+6.61 ± 3.21 nmol·h$^{-1}$·cm$^{-2}$, p=0.043), methylsalicylate (+8.32 ± 3.62 nmol·h$^{-1}$·cm$^{-2}$, p=0.024) and thymol (+9.24 ± 4.12 nmol·h$^{-1}$·cm$^{-2}$, p=0.028). Furthermore, there was a positive trend for eugenol (p=0.10) and vanillin (p=0.055). Calcium secretion was increased after the application of eugenol, methylsalicylate or oleocanthal. The net transport of calcium was not influenced.

Table 3: Effects of various essential oils on the flux of calcium of porcine caecum in $nmol \cdot h^{-1} \cdot cm^{-2}$

| | $J_{m \to s}^{Ca^{2+}}$ | Rel% | $J_{s \to m}^{Ca^{2+}}$ | Rel% | $J_{net}^{Ca^{2+}}$ | Rel% |
|---|---|---|---|---|---|---|
| Control | 31.68 ± 2.56 | 100.0 | 20.89 ± 1.96 | 100.0 | 10.83 ± 2.46 | 100.0 |
| Borneol | 28.29 ± 5.03 | 89.3 | 23.19 ± 3.93 | 111.0 | 4.37 ± 5.25 | 40.3 |
| Carvacrol | 42.72 ± 4.34* | 134.9 | 24.12 ± 3.40 | 115.5 | 19.55 ± 4.47 | 180.4 |
| Citral | 38.35 ± 4.10 | 121.1 | 30.00 ± 3.20* | 143.6 | 8.89 ± 4.19 | 82.1 |
| Eugenol | 28.25 ± 4.67 | 89.2 | 33.11 ± 3.66* | 158.5 | -3.56 ± 4.82* | -32.8 |
| Linalool | 32.67 ± 3.86 | 103.1 | 22.12 ± 3.02 | 105.9 | 9.98 ± 3.94 | 92.1 |
| Menthol | 35.31 ± 3.87 | 111.5 | 26.15 ± 3.03 | 125.2 | 8.62 ± 3.95 | 79.6 |
| Methylsalicylate | 33.94 ± 4.34 | 107.1 | 24.83 ± 3.40 | 118.9 | 8.43 ± 4.47 | 77.8 |
| Oleocanthal | 49.51 ± 5.08* | 156.3 | 47.19 ± 3.98* | 225.9 | 2.74 ± 5.27 | 25.3 |
| Thymol | 26.65 ± 5.03 | 84.1 | 23.04 ± 3.93 | 110.3 | 2.87 ± 5.25 | 26.5 |
| Vanillin | 35.63 ± 4.37 | 112.5 | 24.91 ± 3.42 | 119.2 | 10.81 ± 4.48 | 99.7 |
| Cinnamaldehyde | 34.78 ± 4.37 | 109.8 | 24.54 ± 3.42 | 117.5 | 10.32 ± 4.48 | 95.2 |
| Statistical difference to control within one column are marked with "*", trends (p<0.1) are marked with "·". | | | | | | |

Compared to control conditions, the absorption rate of calcium significantly increased after the addition of carvacrol (+11.04 ± 4.44 nmol·h$^{-1}$·cm$^{-2}$, p=0.015) and oleocanthal (+17.83 ± 5.15 nmol·h$^{-1}$·cm$^{-2}$, p=0.001). Calcium secretion was increased by citral, eugenol and oleocanthal. Menthol tended to increase calcium secretion in caecum (p=0.1).

Net calcium absorption was significantly reduced by eugenol (p=0.007), carvacrol tended to increase net calcium absorption in caecum (p=0.076).

Table 4: Effects of various essential oils on the flux of calcium of porcine colon in nmol·h$^{-1}$·cm$^{-2}$

|  | $J_{m \to s}^{Ca^{2+}}$ | Rel% | $J_{s \to m}^{Ca^{2+}}$ | Rel% | $J_{net}^{Ca^{2+}}$ | Rel% |
|---|---|---|---|---|---|---|
| Control | 39.02 ± 2.03 | 100.0 | 33.41 ± 2.02 | 100.0 | 5.61 ± 2.01 | 100.0 |
| Borneol | 35.48 ± 3.85 | 90.9 | 27.98 ± 3.71 | 83.7 | 5.90 ± 4.50 | 105.1 |
| Carvacrol | 37.56 ± 3.36 | 96.3 | 33.55 ± 3.26 | 100.4 | 4.72 ± 3.80 | 84.2 |
| Citral | 41.29 ± 3.18 | 105.8 | 33.82 ± 3.09 | 101.2 | 8.64 ± 3.56 | 154.0 |
| Eugenol | 37.80 ± 3.61 | 96.9 | 33.24 ± 3.49 | 99.5 | 5.16 ± 4.11 | 91.9 |
| Linalool | 37.84 ± 3.00 | 97.0 | 31.40 ± 2.92 | 94.0 | 6.26 ± 3.35 | 111.5 |
| Menthol | 40.39 ± 3.02 | 103.5 | 40.50 ± 2.94* | 121.2 | 0.33 ± 3.35 | 5.8 |
| Methylsalicylate | 32.71 ± 3.36 | 83.8 | 33.03 ± 3.26 | 98.8 | 1.18 ± 3.8 | 21.0 |
| Oleocanthal | 50.46 ± 3.91* | 129.3 | 45.54 ± 3.78* | 136.3 | 4.42 ± 4.5 | 78.8 |
| Thymol | 40.29 ± 3.85 | 103.2 | 30.25 ± 3.71 | 90.5 | 8.43 ± 4.5 | 150.2 |
| Vanillin | 37.53 ± 3.39 | 96.2 | 27.71 ± 3.29 | 82.9 | 8.96 ± 3.8 | 159.7 |
| Cinnamaldehyde | 40.07 ± 3.39 | 102.7 | 28.12 ± 3.29 | 84.2 | 11.09 ± 3.8 | 197.8 |
| Statistical difference to control within one column are marked with "*", tends (p<0.1) are marked with "·". | | | | | | |

Calcium absorption in colon tended to decrease with methylsalicylate (p=0.062) but increased significantly with oleocanthal. Calcium secretion was increased with oleocanthal and menthol but tended to decrease with vanillin and cinnamaldehyde (p=0.079 and p=0.1). There was no significant effect on net calcium absorption in colon.

The addition of selected TRP modulators leads< to an increase of calcium absorption out of the gut, depending on the tissue (colon, caecum or jejunum).

Example 2

Vanillin, linalool and carvacrol were mixed in a respective weight ratio of 3:3:4. The resulting mixture was added to molten hydrogenated rapeseed oil in an amount of 10 wt% of essential oils based on the total weight of the resulting liquid. The liquid was mixed and subsequently sprayed while cooling to room temperature. The solidified droplets were homogeneously coloured and exhibited considerably less odour compared to the essential oils per se.

Example 3

Vanillin, linalool, cinnamaldehyde and carvacrol were mixed in a respective weight ratio of 2:2:2:4. The resulting mixture was added to molten hydrogenated rapeseed oil in an amount of 10 wt% of essential oils based on the total weight of the resulting liquid. The liquid was mixed and subsequently sprayed while cooling to room temperature. The solidified droplets were homogeneously coloured and exhibited considerably less odour compared to the essential oils per se.

Example 4

Vanillin, linalool, cinnamaldehyde and carvacrol were mixed in a respective weight ratio of 2:2:2:4. The resulting mixture was added to molten hydrogenated rapeseed oil in an amount of 5 wt% of essential oils based on the total weight of the resulting liquid. The liquid was mixed and subsequently sprayed while cooling to room temperature. The solidified droplets were homogeneously coloured and exhibited considerably less odour compared to the essential oils per se.

Example 5

Cinnamaldehyde and carvacrol were mixed in a respective weight ratio of 5:5. The resulting mixture was added to molten hydrogenated rapeseed oil in an amount of 10 wt% of essential oils based on the total weight of the resulting liquid. The liquid was mixed and subsequently sprayed while cooling to room temperature. The solidified droplets were homogeneously coloured and exhibited considerably less odour compared to the essential oils per se.

Example 6

Vanillin, linalool, cinnamaldehyde and carvacrol were mixed in a respective weight ratio of 2:2:2:4. The resulting mixture was added to molten hydrogenated soybean oil in an amount of 10 wt% of essential oils based on the total weight of the resulting liquid. The liquid was mixed and subsequently sprayed while cooling to room temperature. The solidified droplets were homogeneously coloured and exhibited considerably less odour compared to the essential oils per se.

**Claims**

1. Feed additive for monogastric animal feed comprising a TRP modulator capable of improving calcium uptake in the intestine of a monogastric animal, and a controlled release agent.

2. Feed additive according to claim 1 wherein the TRP modulator is capable of improving calcium uptake in the caecum of a monogastric animal.

3. Feed additive according to any one of claims 1 and 2 wherein the TRP modulator is carvacrol.

4. Feed additive according to any one of the preceding claims further comprising a second TRP modulator capable of improving calcium uptake in the colon of a monogastric animal.

5. Feed additive according to claim 4 wherein the second TRP modulator is selected from a group consisting of borneol, citral, linalool, vanillin, thymol and cinnamaldehyde.

6. Feed additive according to any one of claims 4 and 5 wherein the second TRP modulator is citral, vanillin, linalool or cinnamaldehyde.

7. Feed additive according to any one of the preceding claims further comprising a third TRP modulator capable of improving calcium uptake in the jejunum of a monogastric animal.

8. Feed additive according to claim 7 wherein the third TRP modulator is selected from a group consisting of carvacrol linalool, vanillin, and thymol.

9. Feed additive according to any one of claims 7 and 8 wherein the third TRP modulator is linalool or vanillin.

10. Feed additive according to any one of the preceding claims comprising carvacrol, cinnamaldehyde and linalool.

11. Feed additive according to claim 10 further comprising vanillin.

12. Feed additive according to any one of the preceding claims wherein the controlled release agent is selected from hydrogenated animal oils, hydrogenated vegetable oils, fatty acids having at least 14 carbon atoms and pH sensitive polymers.

13. Animal feed comprising the feed additive of any one of the preceding claims.

14. Use of the feed additive of any one of claims 1 to 12 to improve the immune system in monogastric animals and/or the prophylaxis of mastitis metritis agalactia (MMA) in swine.

15. Use of the feed additive of any one of claims 1 to 12 to increase the cation uptake in the intestine of a monogastric animal, in particular in the jejunum, caecum and/or colon of a monogastric animal.

Europäisches
Patentamt

European
Patent Office

Office européen
des brevets

## EUROPEAN SEARCH REPORT

Application Number

EP 19 18 1563

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2008/155536 A1 (DANISCO [DK]; SCHULZE HAGEN KLAUS [NL] ET AL.) 24 December 2008 (2008-12-24) | 1-13 | INV. A23K20/10 A23K20/111 A23K20/158 |
| A | * page 6, line 13; claim 1; tables 8, 37 * * page 11, line 17 - line 18 * | 14,15 | |
| X | WO 2015/160843 A1 (FLEX PHARMA INC [US]; WESTPHAL CHRISTOPH [US] ET AL.) 22 October 2015 (2015-10-22) | 1-13 | |
| A | * page 73; claims 1, 11, 20, 23 * | 14,15 | |
| A | US 2004/009206 A1 (PIVA ANDREA [IT] ET AL) 15 January 2004 (2004-01-15) * the whole document * | 1-15 | |
| A | US 2014/037582 A1 (ROMERO LUIS [GB] ET AL) 6 February 2014 (2014-02-06) * the whole document * | 1-15 | |
| A | US 2016/128933 A1 (SHANG TIANGANG [US] ET AL) 12 May 2016 (2016-05-12) * the whole document * | 1-15 | |

TECHNICAL FIELDS SEARCHED (IPC)

A23K
C11C

The present search report has been drawn up for all claims

| Place of search | Date of completion of the search | Examiner |
|---|---|---|
| The Hague | 22 November 2019 | Picout, David |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 19 18 1563

This annex lists the patent family members relating to the patent documents cited in the above-mentioned European search report.
The members are as contained in the European Patent Office EDP file on
The European Patent Office is in no way liable for these particulars which are merely given for the purpose of information.

22-11-2019

| Patent document cited in search report | Publication date | Patent family member(s) | Publication date |
|---|---|---|---|
| WO 2008155536 A1 | 24-12-2008 | EP 2170100 A1<br>WO 2008155536 A1 | 07-04-2010<br>24-12-2008 |
| WO 2015160843 A1 | 22-10-2015 | AU 2015247815 A1<br>BR 112016024034 A2<br>CA 2945795 A1<br>CN 106232110 A<br>EA 201692060 A1<br>EP 3131541 A1<br>JP 2017513864 A<br>KR 20160143792 A<br>SG 11201608383W A<br>US 2017042834 A1<br>US 2019038573 A1<br>WO 2015160843 A1<br>ZA 201606684 B | 03-11-2016<br>26-12-2017<br>22-10-2015<br>14-12-2016<br>28-02-2017<br>22-02-2017<br>01-06-2017<br>14-12-2016<br>29-11-2016<br>16-02-2017<br>07-02-2019<br>22-10-2015<br>24-04-2019 |
| US 2004009206 A1 | 15-01-2004 | AT 265150 T<br>CA 2433484 A1<br>DE 60200423 T2<br>DK 1391155 T3<br>EP 1391155 A1<br>ES 2220889 T3<br>IT MI20021427 A1<br>PT 1391155 E<br>TR 200401584 T4<br>US 2004009206 A1 | 15-05-2004<br>28-12-2003<br>19-05-2005<br>09-08-2004<br>25-02-2004<br>16-12-2004<br>29-12-2003<br>30-09-2004<br>21-09-2004<br>15-01-2004 |
| US 2014037582 A1 | 06-02-2014 | AU 2013298499 A1<br>AU 2017203253 A1<br>BR 112015002191 A2<br>CA 2880419 A1<br>CN 104684408 A<br>EP 2879520 A2<br>JP 2015530876 A<br>KR 20150039816 A<br>US 2014037582 A1<br>US 2016213755 A1<br>US 2019167769 A1<br>WO 2014020138 A2 | 29-01-2015<br>08-06-2017<br>07-11-2017<br>06-02-2014<br>03-06-2015<br>10-06-2015<br>29-10-2015<br>13-04-2015<br>06-02-2014<br>28-07-2016<br>06-06-2019<br>06-02-2014 |
| US 2016128933 A1 | 12-05-2016 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20150164822 A
- WO 201737157 A
- WO 201586758 A
- WO 2016128530 A

- US 4808412 A
- US 4832967 A
- US 4876097 A